(19) **Europäisches Patentamt / European Patent Office / Office européen des brevets**

(11) **EP 0 966 084 B2**

(12) **NOUVEAU FASCICULE DE BREVET EUROPEEN**
Après la procédure d'opposition

(45) Date de publication et mention de la décision concernant l'opposition:
**17.10.2012 Bulletin 2012/42**

(45) Mention de la délivrance du brevet:
**25.07.2007 Bulletin 2007/30**

(21) Numéro de dépôt: **99401455.3**

(22) Date de dépôt: **14.06.1999**

(51) Int Cl.:
*H02H 7/00* (2006.01)     *B05B 5/10* (2006.01)

(54) **Procédé de commande de moyens de déclenchement de sécurité dans un générateur de haute tension et générateur de haute tension mettant en oeuvre un tel procédé**

Verfahren zur Ansteuerung einer Sicherheitsauslösungsvorrichtung in einem Hochspannungsgenerator und Hochspannungsgenerator zur Durchführung des Verfahrens

Method for controlling the triggering of a safety device in a high voltage generator and high voltage generator using such method

(84) Etats contractants désignés:
**BE CH DE ES GB GR IT LI NL PT SE**

(30) Priorité: **18.06.1998 FR 9807693**

(43) Date de publication de la demande:
**22.12.1999 Bulletin 1999/51**

(73) Titulaire: **SAMES Technologies**
**38240 Meylan (FR)**

(72) Inventeurs:
• **Burtin, Jean Pierre**
**38120 Saint Egreve (FR)**
• **Thome, Caryl**
**38120 Saint Egreve (FR)**

(74) Mandataire: **Myon, Gérard Jean-Pierre et al**
**Cabinet Lavoix**
**62, Rue de Bonnel**
**69448 Lyon Cedex 03 (FR)**

(56) Documents cités:
**EP-A- 0 274 949     EP-B1- 0 185 311**
**DE-A- 3 444 554     US-A- 5 138 513**

EP 0 966 084 B2

**Description**

L'invention concerne un procédé de commande de moyens de déclenchement de sécurité dans un générateur de haute tension plus particulièrement conçu pour les applications électrostatiques de produits de revêtement, les moyens de déclenchement de sécurité ayant pour fonction d'interrompre l'élaboration de la haute tension lorsque apparaît un risque de décharge sous forme d'arc électrique. L'invention concerne également un générateur de haute tension pourvu de moyens de déclenchement de sécurité mettant en oeuvre un tel procédé.

Lors de l'application d'un produit de revêtement par voie électrostatique où des particules de produit de revêtement sont chargées à l'aide d'un générateur de haute tension, il est impératif de détecter et éliminer des situations potentiellement dangereuses qui peuvent se traduire par des décharges brutales sous forme d'arc électrique s'établissant, dans certaines conditions, entre le dispositif de projection de produit de revêtement et la pièce à recouvrir, celle-ci étant généralement métallique et électriquement reliée à la terre. Les systèmes de sécurité connus fonctionnent en mesurant en permanence la valeur du courant délivré par le générateur, en élaborant à partir de celui-ci au moins un paramètre de courant et en comparant ce dernier à un seuil. Par "paramètre de courant", on entend par exemple la valeur du courant I lui-même à un moment donné où sa variation (c'est-à-dire la dérivée du courant par rapport au temps $\frac{dI}{dt}$ ).

De préférence, ces deux paramètres au moins sont pris en compte pour l'évaluation des risques de décharge sous forme d'arc électrique. Si le paramètre de courant est le courant lui-même, il est comparé à une valeur de courant maximum I max. Si le paramètre de courant est la variation du courant (dérivée), il est comparé à une valeur de variation de courant maximum (dI/dt max). Si ledit paramètre de courant excède la valeur limite préréglée, un signal ou une information est élaboré pour piloter des moyens de déclenchement de sécurité aptes à couper la haute tension ou inhiber le générateur, afin de prévenir la formation de l'arc électrique.

Selon les nouvelles normes en vigueur, la valeur autorisée d'énergie issue d'un projecteur de produit de revêtement est de plus en plus faible, typiquement 0,24 mJ pour une peinture liquide et 5 mJ pour une peinture en poudre. Il est donc nécessaire de mettre au point des systèmes de sécurité de plus en plus sensibles et rapides, tout en restant efficaces, c'est-à-dire n'occasionnant pas des déclenchements intempestifs non justifiés.

Une situation critique peut être occasionnée lorsque intervient un brusque rapprochement entre l'objet à recouvrir et l'extrémité du projecteur porté à la haute tension. Ceci est par exemple souvent le cas dans l'application électrostatique de produit de revêtement sur des objets en défilement le long d'un convoyeur, les projecteurs étant placés sur le côté de ce convoyeur. Il peut arriver qu'une partie en saillie de l'objet à peindre passe à proximité du projecteur, créant un risque de décharge sous forme d'arc électrique. Ce dernier peut être à l'origine d'un incendie, notamment dans le cas d'application de peinture solvantée.

A titre d'exemple, on peut citer le problème du traitement d'une carrosserie d'automobile. Au cours du processus de revêtement, la trappe à essence du véhicule est laissée ouverte. Si celle-ci passe très près d'un dispositif de pulvérisation électrostatique, les moyens de contrôle associés au générateur détectent une augmentation anormale du courant, ce qui peut se traduire par une disjonction. Lors du réarmement, la remontée en tension du générateur s'opère classiquement avec inhibition des moyens de déclenchement de sécurité pendant un intervalle de temps prédéterminé. Autrement dit, au début de la remontée en tension du générateur, ces moyens de déclenchement ne peuvent plus intervenir et empêcher une décharge sous forme d'arc électrique. Si la trappe à essence est toujours à proximité du projecteur pendant cette phase de rétablissement de la tension, plusieurs arcs électriques peuvent se produire entre le dispositif de projection de produit de revêtement et la trappe à essence de la carrosserie. Dans certaines circonstances, ces arcs électriques peuvent être à l'origine d'un incendie.

Parmi les tests normalisés ou classiquement utilisés pour évaluer le comportement d'un système de sécurité vis-à-vis d'un problème de ce type, on peut mentionner celui qui consiste à placer une sphère à quelques centimètres de l'extrémité sous haute tension d'un pulvérisateur et à enclencher la haute tension. On constate que la plupart des systèmes actuels ne permettent pas d'éviter des décharges sous forme d'arc électrique aux valeurs d'énergie mentionnées ci-dessus. Un procédé de commande selon l'état de la technique est connu du

document EP-A-0274949.

On connait également du document EP 0 185 311 un procédé de déclenchement de sécurité utilisant une variation d'un seuil, correspondant à la valeur de courant, selon la valeur de la haute tension générée.

L'invention permet de surmonter ces difficultés. Plus précisément, l'invention concerne un procédé de commande de moyens de déclenchement de sécurité dans un générateur de haute tension, notamment pour application électrostatique de produit de revêtement, les moyens de déclenchement étant aptes à interrompre l'élaboration de la haute tension lorsque apparaît un risque de décharge sous forme d'arc électrique, consistant à activer les moyens de déclenchement de sécurité lorsque au moins un paramètre de courant atteint un seuil, consistant à faire varier un tel seuil selon une loi de variation prédéterminée en fonction de la valeur de la haute tension tel que présenté dans la revendication 1.

Le paramètre de courant, au sens défini plus haut, peut être la valeur du courant lui-même. Il peut être aussi la valeur de la variation de ce courant (c'est-à-dire la dérivée du courant par rapport au temps : dI/dt. De préférence, les deux paramètres seront exploités conjointement en définissant pour chacune une loi de variation prédéterminée en fonction de la valeur de la haute tension.

Selon une autre caractéristique notable, les moyens de déclenchement de sécurité sont inhibés lorsque la haute tension est inférieure à une valeur minimum prédéterminée. Autrement dit, l'inhibition des sécurités pendant la phase de montée en tension n'est plus fixée par une temporisation mais dépend seulement du fait qu'un minimum de haute tension a ou non été atteint. Cette particularité présente un avantage supplémentaire. En effet, sur la plupart des générateurs, la rampe de montée de la haute tension est réglable. Par conséquent, en choisissant de libérer les systèmes de sécurité dès qu'un minimum de tension est atteint, on rend l'inhibition indépendante du réglage de la rampe de montée en tension.

L'invention concerne également un générateur de haute tension comprenant des moyens pour élaborer une haute tension et des moyens de déclenchement de sécurité pour couper la haute tension lorsqu'un risque de décharge sous forme d'arc électrique apparaît, comprenant des moyens pour élaborer une information de déclenchement variable en fonction de la valeur de la haute tension, cette information de déclenchement étant associée à un paramètre de courant donné et des moyens de comparaison pour comparer ladite information de déclenchement à une autre information représentative dudit paramètre de courant lui-même, les moyens de comparaison élaborant en réponse une information de commande desdits moyens de déclenchement de sécurité. Le générateur comporte des moyens de mise en oeuvre du procédé revendiqué.

Ce générateur peut avantageusement comporter en outre des moyens de comparaison permettant de comparer une information représentative de la haute tension à une information représentative d'une tension minimum, les moyens de comparaison élaborant en réponse une information de commande de moyens d'inhibition des moyens de déclenchement de sécurité. Il est à noter d'ailleurs que ces moyens d'inhibition peuvent opérer indépendamment du fait que l'on peut faire varier un seuil de déclenchement en fonction de la valeur de la haute tension, comme indiqué ci-dessus.

Il est également à noter que le générateur de haute tension tel qu'il vient d'être décrit et plus particulièrement les moyens de déclenchement de sécurité qu'il comporte, peuvent indifféremment être réalisés par des circuits électroniques classiques traitant de façon analogique les signaux de courant et de tension prélevés sur le générateur ou bien par un traitement numérique à l'aide d'un microprocesseur, de ses mémoires et d'une logique câblée, dès lors que les signaux de courant et de tension ont été convertis en données numériques. Le terme "information" utilisé dans la définition qui précède désigne indifféremment et de façon générique un signal analogique traité en tant que tel ou une donnée numérique représentant un tel signal.

L'invention sera mieux comprise et d'autres avantages de celle-ci apparaîtront plus clairement à la lumière de la description qui va suivre, donnée uniquement à titre d'exemple et faite en référence aux dessins annexés dans lesquels :

- la figure 1 est un schéma-bloc général d'un générateur de haute tension pourvu du perfectionnement conforme à l'invention ;
- la figure 2 est un schéma-bloc particulier des moyens de commande de déclenchement de sécurité intégrés au générateur de la figure 1 ; et
- la figure 3 est un graphe illustrant le fonctionnement du générateur, notamment pendant la montée en tension de celui-ci.

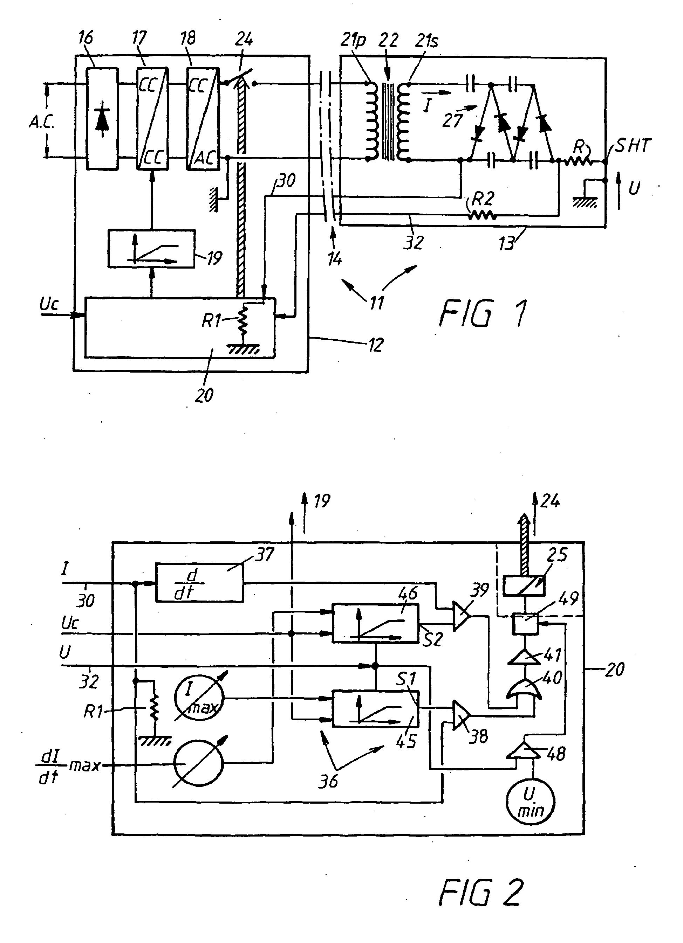

Sur la figure 1, on a représenté les éléments essentiels d'un générateur haute tension 11 qui peut se diviser en deux sous-ensembles, un sous-ensemble à poste fixe 12 et un sous-ensemble mobile 13 intégré à un dispositif de projection électrostatique de produit de revêtement non représenté, les deux sous-ensembles étant reliés entre eux par un toron de fils électriques 14. Le sous-ensemble à poste fixe comporte, reliés en cascades, un redresseur 16, un convertisseur continu-continu 17 et un convertisseur continu-alternatif 18. Le redresseur est destiné à être relié au circuit de distribution de courant alternatif C.A.. Le convertisseur continu-continu 17 est piloté par un circuit de contrôle de tension 19 , d'un type classique, qui permet notamment de contrôler la montée en tension, au démarrage. Ce convertisseur fournit donc une tension continue réglable et à montée progressive au convertisseur continu-alternatif 18. Le circuit de contrôle de montée en tension est lui-même piloté par un circuit de commande 20 recevant entre autres une tension de consigne Uc, variable. Selon une variante, la tension de consigne Uc peut être élaborée dans le circuit 20 lui-même. La sortie du convertisseur continu-alternatif est reliée à l'enroulement primaire 21p d'un transformateur-élévateur, via un contact 24 d'un relais 25 piloté par le circuit de commande 20. L'enroulement secondaire 21s du transformateur 22 est connecté à un circuit multiplicateur de tension 27 du type à condensateurs et diodes communément appelé "circuit cascade". La sortie de ce multiplicateur de tension est reliée à la sortie haute tension SHT du générateur, via une résistance de protection R. Une résistance de mesure R1 est connectée entre une extrémité de l'enroulement secondaire 21s et la masse du dispositif. La résistance R1 est de préférence située dans le sous-ensemble 12, notamment dans le circuit de commande 20 via un conducteur 30 s'étendant entre les sous-ensembles 12 et 13. Si on considère que l'ensemble constitué par l'enroulement secondaire 21s et le circuit multiplicateur de tension 27 constitue un dipôle générateur de haute tension s'étendant entre la masse et la sortie SHT, il apparaît que le courant qui s'écoule vers la charge connectée à cette sortie est aussi le courant qui traverse la résistance R1. Par conséquent, la tension qui se développe aux bornes de cette résistance est représentative du courant haute tension I. La sortie du multiplicateur de tension 27 est également reliée à un conducteur 32 par l'intermédiaire d'une résistance de mesure et de décharge R2. La tension disponible entre ce conducteur 32 et la masse est donc représentative de la valeur de la haute tension U. Les deux conducteurs 30, 32 font partie du toron 14 et sont connectés au circuit de commande 20 faisant partie du sous-ensemble 12.

La figure 2 décrit plus en détail le sous-ensemble traitant de la sécurité dans le circuit de commande 20. On retrouve en entrées les deux conducteurs 30, 32 permettant la mesure du courant haute tension et de la haute tension elle-même. Le circuit renferme la partie électrique du relais 25 dont le contact 24 est en série entre la sortie du convertisseur continu-alternatif 18 et l'enroulement primaire 21 p du transformateur-élévateur. Le circuit de commande renferme des moyens de déclenchement de sécurité 36 pour couper la haute tension lorsqu'un risque de décharge sous forme d'arc électrique apparaît. Le déclenchement de sécurité se traduit par l'ouverture du contact 24 du relais 25, c'est-à-dire par la commande de la partie électromagnétique de ce relais, pour ouvrir le contact 24.

Dans l'exemple représenté, les moyens de déclenchement de sécurité comprennent des moyens pour élaborer au moins une information de déclenchement I max et/ou $\frac{dI}{dt}$ max variable en fonction de la valeur de la haute tension U. Dans l'exemple, on élabore simultanément et en permanence deux telles informations de déclenchement respectivement associées à deux paramètres de courant, eux-mêmes élaborés en permanence et indépendamment l'un de l'autre, à savoir la valeur du courant I lui-même, directement prélevée sur le conducteur d'entrée 30 et la valeur de la variation de ce courant (c'est-à-dire sa dérivée $\frac{dI}{dt}$ par rapport au temps) élaborée à partir d'un circuit différenciateur 37 relié au conducteur 30. Les signaux représentatifs de ces deux paramètres sont respectivement appliqués à des entrées de moyens de comparaison distincts. Plus précisément, le conducteur d'entrée 30 est directement appliqué à une entrée d'un comparateur 38 tandis que la sortie du circuit différenciateur 37 est directement appliquée à une entrée d'un comparateur 39. Les sorties de ces comparateurs sont respectivement reliés à deux entrées d'une porte 40 du type OU dont la sortie pilote le relais 25, par l'intermédiaire d'un amplificateur 40.

Les moyens pour élaborer une information de déclenchement variable en fonction de la valeur de la haute tension, pour ce qui concerne le paramètre de courant constitué par le courant I lui-même comprend un circuit générateur d'une information de déclenchement 45, variable en fonction de la valeur de la haute tension U et dont la sortie S1 est appliquée à l'autre entrée du comparateur 38. Ce circuit générateur 45 comporte trois entrées, l'une reliée au conducteur 32 d'entrée de tension, la seconde reliée à une consigne de tension réglable Uc qui représente la valeur de la haute tension que l'on désire et la troisième reliée à une consigne I max, réglable, qui représente la valeur maximum du courant que l'on désire ne pas dépasser lorsque la haute tension a atteint la valeur Uc. L'information de déclenchement délivrée par le circuit 45 est notée I max(t)

De façon semblable, les moyens pour élaborer une information de déclenchement variable en fonction de la valeur de la haute tension, pour ce qui concerne le paramètre de courant constitué par la variation de courant $\frac{dI}{dt}$ , comprend un circuit générateur d'une information de déclenchement 46, variable en fonction de la valeur de la haute tension U et dont la sortie S2 est appliquée à l'autre entrée du comparateur 39. Ce circuit générateur 46 comporte trois entrées, l'une reliée au conducteur 32 d'entrée de tension, la seconde reliée à la consigne de tension réglable Uc qui représente la valeur de la haute tension que l'on désire et la troisième reliée à une consigne de variation de courant maximum $\frac{dI}{dt}$ max, réglable, qui représente la valeur maximum de la variation du courant (dérivée par rapport au temps) que l'on désire ne pas dépasser lorsque la haute tension a atteint la valeur Uc. L'information de déclenchement délivré par le circuit 46 est notée $\frac{dI}{dt}$ max(t).

Le circuit 45, dont la conception est à la portée de l'homme du métier élabore un signal ou une information représentatif d'un premier seuil variable du type :

$$I\max(t) = I\max\frac{U(t)}{Uc}$$

De même, le circuit 46 élabore un signal ou une information constituant un second seuil correspondant à la variation du courant, du type :

$$\frac{dI}{dt}\max(t) = \frac{dI}{dt}\max\frac{U(t)}{Uc}$$

Autrement dit, les seuils varient chacun selon une loi de variation prédéterminée, ici linéaire en fonction de la valeur de la haute tension et tant que celle-ci est inférieure à la valeur choisie Uc.

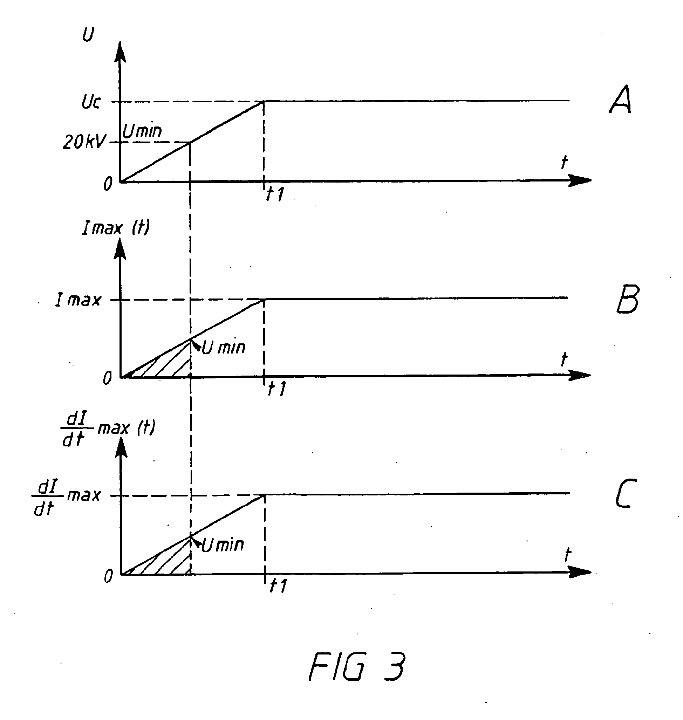

C'est typiquement le cas lors de la montée en tension du générateur, comme on peut le voir sur la figure 3.

Sur cette figure, la courbe A représente la montée en tension du générateur, jusqu'à la valeur Uc, sous la commande du circuit 19. On voit que la tension monte progressivement et ici linéairement pendant une période de temps donnée. A l'instant $t_1$, la valeur de la haute tension atteint la valeur choisie et en principe, elle doit rester constante pendant toute la durée d'utilisation.

Dans le même temps, la courbe B montre l'évolution de l'information de déclenchement I max (t) élaborée par le circuit 45. On constate que le seuil de déclenchement varie sensiblement dans les mêmes proportions que l'évolution de la haute tension elle-même. Par conséquent, notamment pendant la montée en tension du générateur, un déclenchement de sécurité pourra se produire pour un courant I inférieur à I max. Enfin, la courbe C montre l'évolution de l'information de déclenchement $\dfrac{dI}{dt}$ max (*t*) élaborée par le circuit 46. On voit que le seuil de déclenchement évolue sensiblement comme la haute tension. Par conséquent, un déclenchement de sécurité pourra se produire, notamment pendant la phase de démarrage, pour une variation de courant $\dfrac{dI}{dt}$ inférieure à $\dfrac{dI}{dt}$ max.

Enfin, le circuit 20 est complété par des moyens de comparaison 48 pour comparer une information représentative de la haute tension à une information représentative d'une tension minimum U min. Dans l'exemple, il s'agit d'un simple comparateur 48 dont une entrée est reliée au conducteur 32 et dont l'autre entrée est reliée à une référence de tension minimum U min, ici fixée à 20 kV. Dans la pratique, U min doit être fixée à la valeur la plus faible possible pour des raisons de sécurité évidentes. La sortie du comparateur 48 est reliée à un moyen d'inhibition 49 des moyens de déclenchement de sécurité, par exemple inséré entre la sortie de l'amplificateur 41 et le relais 25. Il en résulte que tant que la haute tension n'a pas atteint le seuil minimum choisi ici à 20 kV, le relais 25 ne peut être commandé, à l'ouverture ce qui permet notamment d'absorber sans disjoncter la pointe de courant correspondant à la montée du multiplicateur de tension 27 et d'attendre de pouvoir "lire" des valeurs mesurables de courant.

En variante, la mesure du niveau de haute tension HT peut être réalisée d'une autre façon que celle décrite. On peut par exemple mesurer une tension en sortie du convertisseur 18, laquelle est une image de la valeur de la haute tension réelle. On peut aussi exploiter la tension de commande disponible à la sortie du circuit de contrôle de tension 19. Dans chacun de ces cas, le conducteur 32 est connecté à la sortie du convertisseur 18 ou à la sortie du circuit 19. La résistance R2 peut être supprimée, ce qui est avantageux, si le sous-ensemble mobile 13 est du type manuel, notamment.

**Revendications**

1. Procédé de commande de moyens de déclenchement de sécurité dans un générateur de haute tension (11), notamment pour application électrostatique de produit de revêtement, les moyens de déclenchement étant aptes à interrompre (24) l'élaboration de la haute tension (U) lorsque apparaît un risque de décharge sous forme d'arc électrique, consistant à activer les moyens de déclenchement de sécurité lorsque au moins un paramètre de courant atteint un seuil, **caractérisé en ce que** :

   - le paramètre de courant est une valeur de variation de courant $\dfrac{dI}{dt}$,

   - le procédé consistant à faire varier, pendant une phase de montée en tension dudit générateur, tant que la valeur de haute tension élaborée par ledit générateur est inférieure à une valeur de consigne choisie (Uc) de la haute tension, le seuil ($\dfrac{dI}{dt}$max(*t*)) correspondant audit paramètre de courant selon une loi de variation linéaire sensiblement du type :

   $$\frac{dI}{dt}\max(t) = \frac{dI}{dt}\max\frac{U(t)}{Uc}$$

   où :

   - $\dfrac{dI}{dt}$ max(*t*) est la valeur dudit seuil correspondant à ladite valeur de variation de courant à un moment donné,
   - U(t) est la valeur de la haute tension à ce même moment donné,
   - Uc est la valeur de consigne choisie de la haute tension, et

   - $\dfrac{dI}{dt}$ max est la valeur de variation de courant maximum correspondant à cette valeur de consigne.

**2.** Procédé selon la revendication 1, **caractérisé en ce qu'**un autre paramètre de courant est une valeur de courant, le procédé consistant à faire varier, pendant une phase de montée en tension dudit générateur, tant que la valeur de haute tension élaborée par ledit générateur est inférieure à une valeur de consigne choisie (Uc) de la haute tension, le seuil (Im*ax*(*t*)) correspondant à ladite variation de courant selon une loi de variation linéaire sensiblement du type :

$$\operatorname{Im} ax(t) = \operatorname{Im} ax \frac{U(t)}{Uc}$$

Où:

- Imax(t) est la valeur dudit seuil correspondant à ladite valeur de courant à un moment donné,
- U(t) est la valeur de la haute tension à ce même moment donné,
- Uc est la valeur de consigne choisie de la haute tension, et
- Imax est la valeur de courant maximum correspondant à cette valeur de consigne.

**3.** Procédé selon l'une des revendications précédentes, **caractérisé en ce qu'**il consiste en outre à inhiber (48, 49) lesdits moyens de déclenchement de sécurité lorsque ladite haute tension est inférieure à une valeur prédéterminée.

**4.** Générateur de haute tension comprenant des moyens pour élaborer une haute tension et des moyens de déclenchement de sûreté pour couper la haute tension lorsqu'un risque de décharge sous forme d'arc électrique apparaît, comprenant des moyens pour élaborer une information de déclenchement (45,46) variable en fonction de la valeur de la haute tension, associée à un paramètre de courant donné, et des moyens de comparaison (38, 39) pour comparer l'information de déclenchement à une information représentative dudit paramètre de courant lui-même, les moyens de comparaison élaborant en réponse une information de commande des moyens de déclenchement de sécurité, **caractérisé en ce que** le paramètre de courant est une valeur de variation de courant $\frac{dI}{dt}$, les moyens pour élaborer une information de déclenchement (46) étant mis en oeuvre pendant une phase de montée en tension dudit générateur, l'information de déclenchement correspondant à la valeur de la variation de courant étant élaborée à partir d'informations représentatives de la haute tension délivrée par le générateur U(t), d'une valeur de consigne choisie Uc de la haute tension et d'une consigne de variation de courant maximum $\frac{dI}{dt}$ max correspondant à la valeur de consigne choisie selon une loi linéaire sensiblement du type

$$\frac{dI}{dt} \max(t) = \frac{dI}{dt} \max \frac{U(t)}{Uc}$$, tant que la valeur de haute tension élaborée par ledit générateur est inférieure à la valeur de consigne choisie (Uc) de la haute tension.

**5.** Générateur de haute tension selon la revendication 4, **caractérisé en ce qu'**un autre paramètre de courant est une valeur de courant I, et **en ce qu'**il comporte des moyens pour élaborer une information de déclenchement (45) correspondant à la valeur de courant, mis en oeuvre pendant une phase de montée en tension dudit générateur, l'information de déclenchement correspondant à la valeur de courant étant élaborée à partir d'informations représentatives de la haute tension délivrée par le générateur U(t), de la valeur de consigne choisie Uc et d'une consigne de variation de courant maximum Im *ax*(*t*) correspondant à la valeur de consigne choisie selon une loi linéaire sensiblement du type

$$\operatorname{Im} ax(t) = \operatorname{Im} ax \frac{U(t)}{Uc}$$, tant que la valeur de haute tension élaborée par ledit générateur est inférieure à la valeur de consigne choisie (Uc) de la haute tension.

**6.** Générateur de haute tension selon l'une quelconque des revendications 4 ou 5, **caractérisé en ce qu'**il comporte des moyens de comparaison (48) pour comparer une information représentative de la haute tension à une information représentative d'une tension minimum, les moyens de comparaison étant reliés à un moyen d'inhibition (49) desdits moyens de déclenchement de sécurité.

**Claims**

**1.** Process for controlling safety tripping means in a high-voltage generator (11), in particular for electrostatic application of a coating product, the tripping means being capable of interrupting (24) the generation of the high voltage (U) when there is a risk of discharge in the form of an electric arc, said process consisting in activating the safety tripping means when at least one current parameter attains a threshold, **characterised in that**:

- the current parameter is a value of current variation $\frac{dI}{dt}$,

- the process consisting in varying, during a phase in which the voltage of said generator is rising, as long as the value of high voltage generated by said generator is lower than a chosen desired value (Uc) of the high voltage, the threshold ($\frac{dI}{dt}max(t)$) corresponding to said current parameter in accordance with a substantially linear variation law of the type:

$$\frac{dI}{dt}max(t) = \frac{dI}{dt}max\frac{U(t)}{Uc}$$

where

- $\frac{dI}{dt}$ max(t) is the value of said threshold corresponding to said value of current variation at a given moment,
- U(t) is the value of the high voltage at this same given moment,
- Uc is the chosen desired value of the high voltage, and

- $\frac{dI}{dt}$ max is the value of maximum current variation corresponding to this desired value.

2. Process according to Claim 1, **characterised in that** another current parameter is a current value, the process consisting in varying, during a phase in which the voltage of said generator is rising, as long as the value of high voltage generated by said generator is lower than a chosen desired value (*Uc*) of the high voltage, the threshold (*I*max(*t*)) corresponding to said current variation in accordance with a substantially linear variation law of the type:

$$Imax(t) = Imax\frac{U(t)}{Uc}$$

where

- Imax(t) is the value of said threshold corresponding to said current value at a given moment,
- U(t) is the value of the high voltage at this same given moment,
- *Uc* is the chosen desired value of the high voltage, and
- *I*max is the value of maximum current corresponding to this desired value.

3. Process according to one of the preceding claims, **characterised in that** it consists in inhibiting (48, 49) said safety tripping means when said high voltage is lower than a predetermined value.

4. High-voltage generator comprising means for generating a high voltage and safety tripping means for turning off the high voltage when there is a risk of discharge in the form of an electric arc, comprising means for generating a variable tripping signal (45, 46) as a function of the value of the high voltage, associated with a given current parameter, and comparison means (38, 39) for comparing the tripping signal with a signal that is representative of said current parameter itself, the comparison means generating in response a signal for controlling the safety tripping means,
**characterised in that** the current parameter is a value of current variation $\frac{dI}{dt}$, the means for generating a tripping signal (46) being put into effect during a phase in which the voltage of said generator is rising, the tripping signal corresponding to the value of the current variation being generated from signals that are representative of the high voltage delivered by the generator $U(t)$, of a chosen desired value $Uc$ of the high voltage, and of a set point of maximum current variation $\frac{dI}{dt}$ max corresponding to the desired value chosen in accordance with a substantially linear law of the type $\frac{dI}{dt}max(t) = \frac{dI}{dt}max\frac{U(t)}{Uc}$, as long as the value of high voltage generated by said generator is lower than the chosen desired value (*Uc*) of the high voltage.

5. High-voltage generator according to Claim 4, **characterised in that** another current parameter is a current value *I*, and **in that** it includes means for generating a tripping signal (45) corresponding to the current value, put into effect during a phase in which the voltage of said generator is rising, the tripping signal corresponding to the current value being generated from signals that are representative of the high voltage delivered by the generator $U(t)$, of the chosen desired value $Uc$, and of a set point of maximum current variation Imax(t) corresponding to the desired value chosen in accordance with a substantially linear law of the type $Imax(t) = Imax\frac{U(t)}{Uc}$, as long as the value of high voltage generated by said generator is lower than the chosen desired value

(Uc) of the high voltage.

**6.** High-voltage generator according to either one of Claims 4 or 5, **characterised in that** it includes comparison means (48) for comparing a signal that is representative of the high voltage with a signal that is representative of a minimum voltage, the comparison means being connected to a means for inhibition (49) of said safety tripping means.

## Patentansprüche

**1.** Verfahren zur Steuerung von Sicherheitsauslösemitteln in einem Hochspannungsgenerator (11), insbesondere für die elektrostatische Aufbringung eines Beschichtungsprodukts, wobei die Auslösemittel geeignet sind, die Erzeugung der Hochspannung (U) zu unterbrechen (24), wenn die Gefahr einer Entladung in Form eines Lichtbogens auftaucht, das darin besteht, die Sicherheitsauslösemittel zu aktivieren, wenn mindestens ein Stromparameter eine Schwelle erreicht, **dadurch gekennzeichnet, dass**

- der Stromparameter ein Wert der Änderung des Stromes $\frac{dI}{dt}$ ist,

- das Verfahren darin besteht, während einer Phase des Spannungsanstiegs des Generators, soweit der von dem Generator erstellte Wert der Hochspannung kleiner als ein gewählter Sollwert (Uc) der Hochspannung ist, die dem Stromparameter entsprechende Schwelle ($\frac{dI}{dt}$ max(t)) gemäß einem Gesetz der linearen Abhängigkeit variieren zu lassen, im Wesentlichen der Art:

$$\frac{dI}{dt} \text{ max (t)} = \frac{dI}{dt} \text{ max } \frac{U(t)}{Uc}$$

wobei

- $\frac{dI}{dt}$ max(t) der Wert der Schwelle entsprechend dem Wert der Stromänderung zu einem gegebenen Zeitpunkt,
- U(t) der Wert der Hochspannung zu diesem gegebenen Zeit punkt,
- Uc der gewählte Sollwert der Hochspannung und
- $\frac{dI}{dt}$ max der maximale Stromänderungswert entsprechend diesem Sollwert sind.

**2.** Verfahren nach Anspruch 1, **dadurch gekennzeichnet, dass** ein anderer Stromparameter ein Stromwert ist, wobei das Verfahren darin besteht, während einer Phase des Anstiegs der Spannung des Generators, soweit der von dem Generator erstellte Wert der Hochspannung kleiner als ein gewählter Sollwert (Uc) der Hochspannung ist, die der Änderung des Stromwerts entsprechende Schwelle ($I$ max (t)) gemäß einem Gesetz der linearen Änderung variieren zu lassen, im Wesentlichen der Art:

$$I \text{ max (t)} = I \text{ max } \frac{U(t)}{Uc},$$

wobei

- $I$max (t) der Wert der Schwelle entsprechend dem Stromwert zu einem gegebenen Zeitpunkt,
- U (t) der Wert der Hochspannung zu diesem gegebenen Zeitpunkt,
- Uc der gewählte Sollwert der Hochspannung und
- $I$max der maximale Stromwert entsprechend diesem Sollwert sind.

**3.** Verfahren nach einem der vorhergehenden Ansprüche, **dadurch gekennzeichnet, dass** es außerdem darin besteht, die Sicherheitsauslösemittel zu hemmen (48, 49), wenn die Hochspannung kleiner als ein vorgegebener Wert ist.

**4.** Hochspannungsgenerator, umfassend Mittel zum Erzeugen einer Hochspannung und Sicherheitsauslösemittel, um die Hochspannung abzuschalten, wenn die Gefahr einer Entladung in Form eines Lichtbogens auftritt, umfassend Mittel zum Erzeugen einer variablen, von dem Hochspannungswert abhängigen Auslöseinformation (45, 46), die einem gegebenen Stromparameter zugeordnet ist, und Vergleichsmittel (38, 39) zum Vergleich der Auslöseinformation mit einer Information, die für den Stromparameter selbst repräsentativ ist, wobei die Vergleichsmittel als Antwort eine Steuerinformation für die Sicherheitsauslösemittel erzeugen, **dadurch gekennzeichnet, dass** der Stromparameter ein Wert der Änderung des Stroms $\frac{dI}{dt}$ ist, wobei die Mittel zum Erzeugen einer variablen Auslöseinformation (46) während einer Phase des Spannungsanstiegs des Generators eingesetzt werden und die Auslöseinformation entsprechend dem Wert der Änderung des Stroms aus Informationen erzeugt wird, die für die vom Generator gelieferte Hochspannung U(t), einen gewählten Hochspannungssollwert Uc und einen maximalen Sollwert der Änderung des Stroms $\frac{dI}{dt}$ max(t) entsprechend dem gewählten Sollwert gemäß einem linearen Gesetz repräsentativ sind, im Wesentlichen der Art

$$\frac{dI}{dt} \max(t) = \frac{dI}{dt} \max \frac{U(t)}{Uc},$$

soweit der von dem Generator erstellte Wert der Hochspannung kleiner als der gewählter Sollwert (Uc) der Hochspannung ist.

5. Hochspannungsgenerator nach Anspruch 4, **dadurch gekennzeichnet, dass** ein anderer Stromparameter ein Stromwert I ist und dass er Mittel zum Erzeugen einer Auslöseinformation (45) entsprechend einem Stromwert umfasst, die während einer Phase des Spannungsanstiegs des Generators eingesetzt werden, wobei die Auslöseinformation entsprechend dem Stromwert aus Informationen erzeugt wird, die für die vom Generator gelieferte Hochspannung U(t), den gewählten Sollwert Uc und einen Sollwert der Änderung des maximalen Stroms *I* max (t) entsprechend dem gewählten Sollwert gemäß einem Gesetz der linearen Änderung repräsentativ sind, Im Wesentlichen der Art:

$$I \max(t) = I \max \frac{U(t)}{Uc},$$

soweit der von dem Generator erstellte Wert der Hochspannung kleiner als der gewählter Sollwert (Uc) der Hochspannung ist.

6. Hochspannungsgenerator nach einem beliebigen der Ansprüche 4 oder S, **dadurch gekennzeichnet, dass** er Vergleichsmittel (48) zum Vergleich einer für die Hochspannung repräsentativen Information mit einer für die minimale Spannung repräsentativen Information umfasst, wobei die Vergleichsmittel mit einem Mittel (49) zu Hemmen der Sicherheitsauslösemittel verbunden sind.

*FIG 1*

*FIG 2*

FIG 3

EP 0 966 084 B2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0274949 A
- EP 0185311 A